# EUROPÄISCHE PATENTSCHRIFT

(11) **EP 3 301 327 B1**
(45) Veröffentlichungstag und Bekanntmachung des Hinweises auf die Patenterteilung: **05.06.2019**
(21) Anmeldenummer: 17189733.3
(22) Anmeldetag: 07.09.2017
(51) Int. Cl.: F16H 25/24

(54) **LINEARBEWEGUNGSVORRICHTUNG MIT SPINDELABSTÜTZUNG**
LINEAR MOVEMENT DEVICE WITH SPINDLE SUPPORT
DISPOSITIF DE MOUVEMENT LINÉAIRE POURVU DE SUPPORT DE BROCHE

(30) Priorität: 29.09.2016 DE 102016218804
(43) Veröffentlichungstag der Anmeldung: 04.04.2018
(73) Patentinhaber: Robert Bosch GmbH, 70442 Stuttgart (DE)
(72) Erfinder: Li, Wei, 97424 Schweinfurt (DE); Keller, Bernhard, 97535 Wasserlosen (DE)
(74) Vertreter: Maiß, Harald

(56) Entgegenhaltungen:
- EP-A2- 1 120 585
- DE-U1-202012 102 316
- DE-U1-202013 105 114

## Beschreibung

Die Erfindung betrifft eine Linearbewegungsvorrichtung gemäß dem Oberbegriff von Anspruch 1.

Aus der DE 20 2012 102 316U ist eine Linearbewegungsvorrichtung bekannt, bei der eine Gewindespindel über mehrere linearbewegliche Stützelemente abgestützt wird. Zur Positionierung des mindestens einen Stützelementes weist dieses einen Anschlag auf, der mit einem an einem Profil vorgesehenen Stopper zusammenwirkt, um das Stützelement in einer vorbestimmten Position in Längsrichtung der Gewindespindel an dem Profil oder der Schiene zu fixieren.

Aus der DE 41 20 500 C1 ist eine Linearbewegungsvorrichtung bekannt, bei der eine Gewindespindel über mehrere linearbewegliche Stützelemente abgestützt wird. Die Stützelemente stehen über Permanentmagnete in lösbarer Mitnahmeverbindung. Weiter sind im Gehäuse Anschlagelemente vorgesehen, welche die Stützelemente an der gewünschten Stützstelle aufhalten. Die Stützelemente haften mit Permanentmagneten an dem jeweils zugeordneten Anschlagelement, damit sie beim Vertikaleinbau der Linearbewegungsvorrichtung nicht herabfallen.

Aus der SE 512 637 C2 ist eine weitere Linearbewegungsvorrichtung mit Stützelementen für die Gewindespindel bekannt. Die Stützelemente haben jeweils zwei Reibelemente, welche unter Vorspannung am Gehäuse anliegen.

Ein Vorteil der vorliegenden Erfindung besteht darin, dass die Stützelemente bei vertikal eingebauter Linearbewegungsvorrichtung auch dann nicht herabfallen, wenn sie mit hoher Geschwindigkeit gegen das zugeordnete Anschlagelement fahren. Das erfindungsgemäße Linearmodul ist besonders einfach und kostengünstig aufgebaut. Die Stützelemente haben ein geringes Gewicht, so dass die Massenkräfte beim Beschleunigen und Abbremsen gering sind.

Gemäß dem selbständigen Anspruch wird vorgeschlagen, dass das Gegenanschlagelement in Richtung der Längsachse über eine erste Feder an einem Stützkörper des Stützelements abgestützt ist, so dass es in Richtung der Längsachse federnd beweglich gegenüber dem Stützkörper ist. Damit ist für die Größe der Rückprallkräfte beim Anfahren eines Anschlagelements nur noch die geringe Masse des Gegenanschlagelements und nicht mehr die gesamte Masse des Stützelements maßgebend. Hierdurch wird die oben angesprochene Gefahr des Herabfallens eines Stützelements bei Vertikaleinbau der Linearbewegungsvorrichtung erheblich reduziert bzw. ganz ausgeschlossen.

Das Gegenmitnahmeelement oder das Mitnahmeelement umfasst vorzugsweise wenigstens einen Permanentmagnet, wobei das andere Teil, Mitnahmeelement oder Gegenmitnahmeelement, ein ferromagnetisches Element umfasst. Das Mitnahmeelement und das Gegenmitnahmeelement können auch Teile eines Rastverschlusses oder eines Klettverschlusses sein. Die Gewindespindel ist vorzugsweise bezüglich der Längsachse drehbar am Gehäuse gelagert. Die Gewindespindel durchsetzt vorzugsweise einen Stützdurchbruch im Stützkörper, der höchst vorzugsweise kreiszylindrisch bezüglich der Längsachse ausgebildet ist, wobei er mit geringem Spiel an die Gewindespindel angepasst ist. Im Schlitten ist vorzugsweise eine gesonderte Gewindemutter fest aufgenommen, welche in Schraubeingriff mit der Gewindespindel steht. Die Gewindemutter ist vorzugsweise als Kugelumlaufmutter ausgebildet.

In den abhängigen Ansprüchen sind vorteilhafte Weiterbildungen und Verbesserungen der Erfindung angegeben.

Es kann vorgesehen sein, dass das Gegenanschlagelement in Richtung der Längsachse am Stützkörper geführt ist, wobei sein Bewegungsweg durch einen ersten und einen zweiten Endanschlag begrenzt ist, wobei es von der ersten Feder zum ersten Endanschlag hin vorgespannt ist, wobei es durch das zugeordnete Anschlagelement zum zweiten Endschlag hin bewegbar ist. Hierdurch wird verhindert, dass die erste Feder durch Beschleunigungskräfte übermäßig gedehnt wird. Weiter kann eine erste Feder mit geringer Steifigkeit verwendet werden, welche durch entsprechende Vorspannung dennoch die erforderlichen Kräfte bereitstellt.

Es kann vorgesehen sein, dass das Gegenanschlagelement einen Gegenanschlagkörper und einen Schraubbolzen mit einem Kopf umfasst, wobei der Schraubbolzen den Stützkörper durchsetzt, wobei er in den Gegenanschlagkörper eingeschraubt ist, wobei die erste Feder zwischen dem Gegenanschlagkörper und dem Stützkörper angeordnet ist. Dieses Gegenanschlagelement ist besonders einfach und kostengünstig. Die erste Feder ist vorzugsweise in Form einer Schraubenfeder ausgebildet, welche den Schraubbolzen umgibt. Der Gegenanschlagkörper ist vorzugsweise kreiszylindrisch ausgebildet, wobei seine Mittelachse parallel zur Längsachse ausgerichtet ist. Er ist vorzugsweise als Permanentmagnet ausgebildet. Der erste Endanschlag ist vorzugsweise erreicht, wenn der Kopf des Schraubbolzens am Stützkörper anliegt. Der zweite Endanschlag ist vorzugsweise erreicht, wenn der Gegenanschlagkörper am Stützkörper anliegt. Die Schraubverbindung zwischen dem Gegenanschlagkörper und dem Schraubbolzen ist vorzugsweise mittels eines Klebstoffs gegen Lösen gesichert.

Es kann vorgesehen sein, dass das Gegenanschlagelement in eine lösbare Haftverbindung mit dem Anschlagelement bringbar ist. Hierdurch wird das Herabfallen der Stützelemente bei Vertikaleinbau der Linearbewegungsvorrichtung vermieden. Das Gegenanschlagelement oder das Anschlagelement umfasst vorzugsweise einen Permanentmagnet, wobei das andere Teil, Anschlagelement oder Gegenanschlagelement, ein ferromagnetisches Element umfasst. Das Gegenanschlagelement und das Anschlagelement können auch Teile eines Rastverschlusses oder eines Klettverschlusses sein.

Es kann vorgesehen sein, dass das Gehäuse wenigstens eine Anschlagnut aufweist, welche sich parallel zur Längsachse erstreckt, wobei der wenigstens eine Stützkörper einen Anschlagfortsatz aufweist, welcher in eine jeweils zugeordnete Anschlagnut hineinragt, wobei das Anschlagelement in der Anschlagnut befestigt ist, wobei das Gegenanschlagelement zumindest abschnittsweise innerhalb der Anschlagnut angeordnet ist, wobei es vom Anschlagfortsatz gehalten wird. Hierdurch wird vermieden, dass das Gegenanschlagelement seitlich ausweicht, wenn es das Anschlagelement anstößt. Das Anschlagelement ist vorzugsweise lösbar in der zugeordneten Anschlagnut befestigt, so dass es in Richtung der Längsachse an unterschiedlichen Positionen befestigbar ist. Die Anschlagnutnut weist vorzugsweise ein T-förmiges Querschnittsprofil aus. Das Anschlagelement ist vorzugsweise in der Art eines Nutensteins ausgebildet, wobei es höchst vorzugsweise mit wenigstens einem Gewindestift in der Anschlagnut festklemmbar ist.

Es kann vorgesehen sein, dass der Schraubbolzen den Anschlagfortsatz durchsetzt.

Es kann wenigstens ein Reibelement vorgesehen sein, welches quer zur Längsachse beweglich am Stützkörper gelagert ist, wobei es unter Vorspannung am Gehäuse anliegt. Hierdurch wird die Bewegungsenergie des Stützkörpers nach dem Anfahren eines Anschlagelements sanft in Wärme umgewandelt, so dass der Stützkörper unter geringer Krafteinwirkung zum Stillstand kommt. Vorzugsweise ist das Reibelement als gesondertes Bauteil ausgeführt, wobei zwischen dem Reibelement und dem Stützkörper eine zweite Feder unter Vorspannung eingebaut ist. Es ist aber auch denkbar, dass das Reibelement über einen federelastischen Abschnitt einstückig mit dem Stützkörper verbunden ist.

Es können zwei Reibelemente vorgesehen sein, welche bezüglich einer gemeinsamen Mittelachse fluchtend zueinander angeordnet sind, wobei sie bezüglich der Mittelachse in entgegengesetzter Richtung unter Vorspannung am Gehäuse anliegen. Die Reibelemente bilden somit eine Seitenführung für das Stützelement. Diese verhindert insbesondere, dass das Stützelement um die nachfolgend erläuterte Führungsschiene verkippt wird. Die Mittelachse weist hierfür vorzugsweise einen Abstand zur Führungsschiene auf, der höchst vorzugsweise groß gewählt ist.

Es kann vorgesehen sein, dass in dem Gehäuse wenigstens eine gesonderte Führungsschiene befestigt ist, an welcher der Schlitten in Richtung der Längsachse beweglich gelagert ist, wobei das wenigstens eine Stützelement an zumindest einer Führungsschiene in Richtung der Längsachse beweglich gelagert ist. Die Lagerung der Stützelemente ist damit besonders einfach und kostengünstig. Das wenigstens eine Stützelement ist vorzugsweise gleitbeweglich an der betreffenden Führungsschiene gelagert. Die wenigstens eine Führungsschiene erstreckt sich vorzugsweise mit einer konstanten Querschnittsform in Richtung der Längsachse. Der Schlitten umfasst vorzugsweise wenigstens einen gesonderten Führungswagen, welcher in Führungseingriff mit einer zugeordneten Führungsschiene steht. Der Führungswagen ist vorzugsweise über wenigstens eine Reihe von Wälzkörpern an der zugeordneten Führungsschiene abgestützt, wobei die Wälzkörper höchst vorzugsweise endlos umlaufen.

Es kann vorgesehen sein, dass der Anschlagfortsatz zwischen der wenigstens einen Führungsschiene und der Mittelachse angeordnet ist. Hierdurch wird ein Verkippen der Stützelemente beim Anfahren eines Anschlagelements vermieden bzw. minimiert.

Die Erfindung wird im Folgenden anhand der beigefügten Zeichnungen näher erläutert. Es zeigt:
- Fig. 1: eine perspektivische Ansicht einer erfindungsgemäßen Linearbewegungsvorrichtung ohne das Gehäuse;
- Fig. 2: eine Explosionsansicht eines Stützelements; und
- Fig. 3: einen Querschnitt der Linearbewegungsvorrichtung nach Fig. 1 im Bereich eines Stützelements.

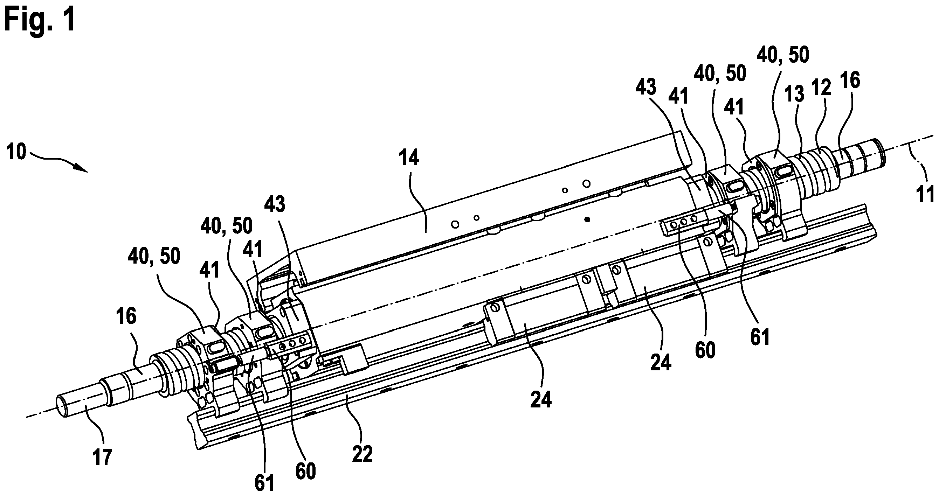

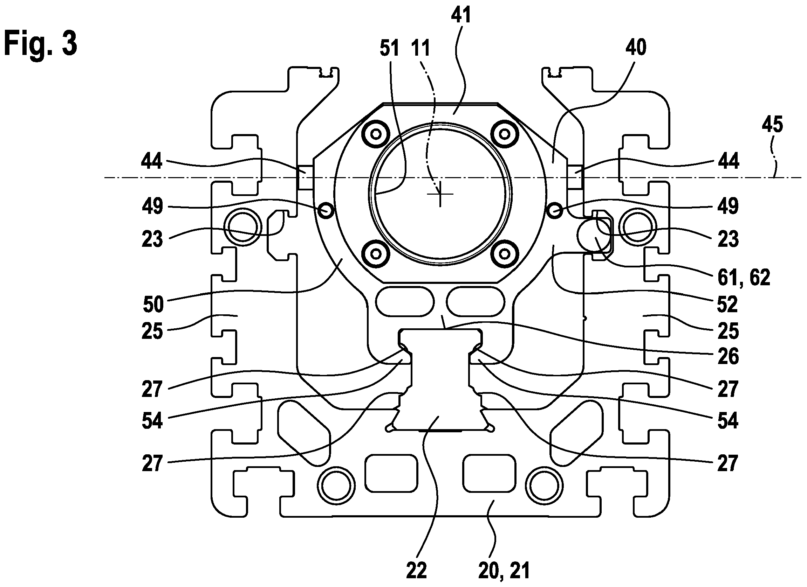

Fig. 1 zeigt eine perspektivische Ansicht einer erfindungsgemäßen Linearbewegungsvorrichtung 10 ohne das Gehäuse (Nr. 20 in Fig. 3). Die Linearbewegungsvorrichtung 10 umfasst eine Gewindespindel 12, welche an ihrer Außenumfangsfläche mit wenigstens einem bezüglich einer Längsachse 11 schraubenförmig verlaufenden Gewindegang 13 versehen ist. Der Gewindegang 13 steht in Schraubeingriff mit den Kugeln einer im Schlitten 14 befestigten Wälzkörperumlaufmutter und ist dementsprechend als Nut mit näherungsweise kreisförmigem Querschnitt ausgebildet. An ihren beiden in Richtung der Längsachse 11 gegenüberliegenden Enden ist die Gewindespindel 12 jeweils mit einem Lagersitz 16 versehen. Dort ist sie jeweils über ein Radialwälzlager bezüglich der Längsachse 11 drehbar am Gehäuse abgestützt. Die Gewindespindel 12 ragt mit einem Antriebszapfen 17 aus dem Gehäuse heraus, so dass sie beispielsweise in Drehantriebsverbindung mit einem Elektromotor bringbar ist.

Unterhalb der Gewindespindel 12 ist eine gesonderte Führungsschiene 22 befestigt, welche sich mit einer konstanten Querschnittsform parallel zur Längsachse 11 erstreckt. Auf der Führungsschiene 22 sind mehrere Führungswägen 24 in Richtung der Längsachse 11 beweglich abgestützt, wobei die Führungswägen 24 vorzugsweise jeweils mehrere Reihen von endlos umlaufenden Wälzkörpern aufweisen. Die Führungswägen 24 sind fest mit den verbleibenden Schlitten 14 verbunden, insbesondere verschraubt.

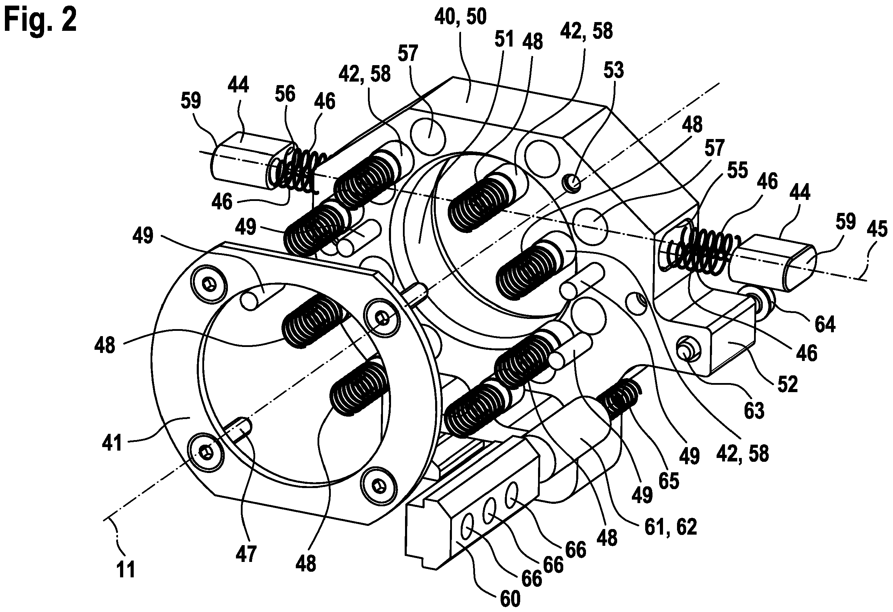

In Richtung der Längsachse 11 vor und hinter dem Schlitten 14 sind vorliegend jeweils zwei Stützelemente 40 angeordnet, wobei deren Anzahl weitgehend beliebig wählbar ist. Die Stützelemente 40 umgreifen die Kopfseite der Führungsschiene 22 jeweils formschlüssig, so dass sie quer zur Längsachse 11 weitgehend unbeweglich zur Führungsschiene 22 bzw. zum Gehäuse sind. In Richtung der Längsachse 11 sind die Stützelemente 40 dagegen beweglich. Die Gewindespindel 12 durchsetzt einen spielarm angepassten, kreiszylindrischen Stützdurchbruch (Nr. 51 in Fig. 2) eines jeden Stützelements 40. Dementsprechend ist sie über die Stützelemente 40 quer zur Längsachse 11 am Gehäuse abgestützt. Die Drehzahl der Gewindespindel 12 kann daher sehr hoch gewählt werden, ohne dass die Gewindespindel 12 in Biegeumlaufschwingungen gerät. Insbesondere können lange Gewindespindeln 12 bei hoher Drehzahl betrieben werden.

Damit die Stützelemente 40 die Linearbewegung des Schlittens 14 nicht behindern, sind diese in Richtung der Längsachse 11 beweglich. Wenn sich der Schlitten 14 auf eines oder mehrere Stützelemente 40 zu bewegt, schiebt er diese vor sich her, bis er seine Endlage im Gehäuse erreicht hat. Wird anschließend die Bewegungsrichtung umgekehrt, so nimmt der Schlitten 14 die Stützelemente 40 über eine lösbare Mitnahmeverbindung mit, welche vorliegend mittels Permanentmagneten realisiert ist. Im Gehäuse sind mehrere Anschlagelemente 60 befestigt, welche den Bewegungsweg eines jeweils zugeordneten Stützelements 40 formschlüssig begrenzen, so dass die Anschlagelemente 40 an einer für die Abstützung der Gewindespindel 12 günstigen Stelle stehen bleiben. Wenn ein Stützelement 40 gegen das zugeordnete Anschlagelement 60 fährt, wird die maximale Haltekraft der lösbaren Mitnahmeverbindung zum Schlitten 14 bzw. zum benachbarten Stützelement 40 überschritten, so dass die Mitnahmeverbindung gelöst wird.

Fig. 2 zeigt eine Explosionsansicht eines Stützelements 40. Die vorliegende Erfindung zielt insbesondere auf Anwendungsfälle ab, bei denen die Längsachse 11 parallel zur Richtung der Schwerkraft angeordnet ist. In diesem Fall muss die lösbare Mitnahmeverbindung zusätzlich die Gewichtskraft der Stützelemente 40 tragen, welche unterhalb des Schlittens 14 angeordnet sind. Dies geschieht in erster Linie dadurch, dass das Anschlagelement 60 mit dem zugeordneten Gegenanschlagelement 61 am Stützelement 40 in eine lösbare Haftverbindung bringbar ist. Das Gegenanschlagelement 61 ist hierfür insbesondere als Permanentmagnet ausgebildet, wobei das Anschlagelement 60 aus ferromagnetischem Stahl besteht. Versuche der Anmelderin haben gezeigt, dass es dennoch vorkommen kann, dass ein Stützelement 40 herabfällt, kurz nachdem es mit hoher Geschwindigkeit gegen das zugeordnete Anschlagelement 60 gefahren wurde. Der Grund hierfür ist insbesondere im Rückprall des Stützelements 40 aufgrund der Impulserhaltung zu suchen. Die entsprechenden Stoßkräfte können so stark sein, dass sie die Haftekraft zwischen dem Anschlagelement 60 und dem Gegenanschlagelement 61 übersteigen.

Um die genannten Stoßkräfte zu minimieren, wurde zwischen dem Stützkörper 50 des Stützelements 40 und dem Gegenanschlagelement 61 eine erste Feder 65 angeordnet. Dementsprechend ist für die schädlichen Rückprallkräfte allein die geringe Masse des Gegenanschlagelements 61 relevant, wobei die vergleichsweise große Masse des Stützkörpers 50 keinen Einfluss hat. Diese kann vielmehr im Rahmen des Federwegs der ersten Feder 65 frei zurückfedern.

Es ist denkbar, dass der Stützkörper 50 und das Gegenanschlagelement 61 ausschließlich über die erste Feder 65 miteinander verbunden sind, so dass sich ein Federweg ohne jede Endanschläge ergibt. Im Sinne einer definierten Minimierung des Bewegungswegs der Stützelemente 40 relativ zum Gegenanschlagelement 61 ist es jedoch bevorzugt, wenn die entsprechende Bewegung einen ersten und einen zweiten Endanschlag aufweist. Diese wurde mittels eines Schraubbolzens 63 realisiert, welcher den Stützkörper 50 durchsetzt, wobei er in den Gegenanschlagkörper 62 fest eingeschraubt ist, wobei er vorzugsweise durch Verkleben gegen Lösen gesichert ist. Der Kopf 64 des Schraubbolzens 63 ist auf der dem Gegenanschlagkörper 62 gegenüberliegenden Seite des Stützkörpers 50 angeordnet. Die erste Feder 65 ist in Form einer Schraubenfeder ausgebildet, welche den Schaft des Schraubbolzens 63 umgibt, wobei sie unter Vorspannung zwischen dem Gegenanschlagkörper 62 des Gegenanschlagelements 61 und dem Stützkörper 50 eingebaut ist. Der Gegenanschlagkörper 62 ist kreiszylindrisch ausgebildet, wobei seine Mittelachse parallel zur Längsachse 11 verläuft. Er besteht vorzugsweise vollständig aus permanentmagnetischem Material. Der Schraubbolzen 63 ist ebenfalls parallel zur Längsachse 11 angeordnet.

Der Kopf 64 des Schraubbolzes 63 wird durch die Vorspannkraft der ersten Feder 65 gegen den Stützkörper 50 gedrückt, so dass der erste Endanschlag erreicht ist. Wenn der Gegenanschlagkörper 62 gegen das Anschlagelement 60 fährt, wird die erste Feder 65 zusammengedrückt. Wenn dies mit sehr hoher Geschwindigkeit geschieht, kann es vorkommen, dass der Stützkörper 50 den Gegenanschlagkörper 62 berührt. Die erste Feder 65 ist vorzugsweise so ausgelegt, dass dies im Normalbetrieb nicht oder nur noch mit geringer Geschwindigkeit geschieht. Anschließend kehrt sich die Bewegungsrichtung des Stützkörpers 50 um, wobei er sich bis zum Kopf 64 des Schraubbolzens 63 zurückbewegt. Damit er auch dort nur noch mit geringer Geschwindigkeit anschlägt, sind die Reibelemente 44 vorgesehen, welche unter Vorspannung am Gehäuse anliegen. Die Bewegungsenergie des Stützkörpers 50 wird dementsprechend durch Reibkräfte in Wärme umgewandelt. Der Bewegungsweg der ersten Feder 65 steht hierfür als Bremsweg zur Verfügung.

Die beiden Reibelemente 44 sind bezüglich einer gemeinsamen Mittelachse 45 in einer Flucht angeordnet, wobei die Mittelachse 45 quer zur Längsachse 11 ausgerichtet ist. Die Reibelemente 44 sind identisch ausgebildet, wobei sie in Richtung der Mittelachse 45 eine konstante, insbesondere langlochförmige Querschnittsform aufweisen. Sie sind jeweils in einer angepassten Führungsausnehmung 55 im Stützkörper 50 spielarm aufgenommen, so dass sie in Richtung der Mittelachse 45 beweglich sind. Zwischen den einstückigen Reibelementen 44 und dem Stützkörper 50 sind jeweils zwei zweite Federn 46 eingebaut, so dass die Reibelemente in entgegengesetzter Richtung gegen das Gehäuse gedrückt werden. Die zweiten Federn 46 sind jeweils als Schraubenfedern ausgebildet, wobei sie in einer jeweils zugeordneten kreiszylindrischen Federausnehmungen 56 im betreffenden Reibelement 44 versenkt aufgenommen sind. Die am Gehäuse anliegende Reibfläche 59 der Reibelemente 44 ist jeweils eben ausgebildet.

Das Mitnahmeelement 41 wird von einer ebenen Platte mit konstanter Dicke gebildet, welche aus ferromagnetischem Stahl besteht, wobei sie senkrecht zur Längsachse 11 angeordnet ist. Sie umgibt die Gewindespindel ringartig, wobei ihr Innendurchmesser etwas größer als der Durchmesser des Stützdurchbruchs 51 im Stützkörper 50 ausgebildet ist. Sie ist mit mehreren Befestigungsschrauben 47 am Stützkörper 50 befestigt, welche in zugeordnete Gewindebohrungen 53 eingeschraubt sind. Wie aus Fig. 1 ersichtlich, ist jedes Stützelement 40 mit einem derartigen Mitnahmeelement versehen.

Das Gegenmitnahmeelement 42 umfasst mehrere gesonderte Permanentmagnete 58, welche jeweils kreiszylindrisch ausgebildet sind, wobei ihre Mittelachse parallel zur Längsachse 11 verläuft. Die Permanentmagnete 58 sind jeweils in einer angepassten Magnetausnehmung 57 im Stützkörper 50 aufgenommen, welche als Grundlochbohrung ausgebildet ist. Alle Magnetausnehmungen 57 werden von dem Mitnahmeelement 41 überdeckt. Zwischen den Permanentmagneten 58 und dem Mitnahmeelement 41 ist jeweils eine als Schraubenfeder ausgebildete dritte Feder 48 angeordnet, welche den betreffenden Permanentmagnet 58 gegen den Grund der Magnetausnehmung 57 drückt. Demensprechend sind das Mitnahmeelement 41 und das Gegenmitnahmeelement 42 eines Stützelements 40 in Richtung der Längsachse 11 an gegenüberliegenden Seiten des Stützkörpers 11 angeordnet. Folglich werden die Mitnahmeleemente 41 jeweils vom Gegenmitnahmeelement 42 (bzw. Nr. 43 in Fig. 1) des benachbarten Stützelements 40 bzw. des Läufers angezogen.

Hinzuweisen ist noch darauf, dass nicht alle Magnetausnehmungen 57 mit Permanentmagneten 58 bestückt zu sein brauchen. Vielmehr ist daran gedacht, dass diejenigen Stützelemente 40, welche näher am Schlitten angeordnet sind, mehr Permanentmagnete 58 aufweist, als diejenigen, die weiter entfernt vom Schlitten angeordnet sind. Das Gegenmitnahmeelement (Nr. 43 in Fig. 1) am Schlitten weist am meisten Permanentmagnete 58 auf, wobei im äußerten Stützelement überhaupt keine Permanentmagnete 58 angeordnet sind. Das Gegenmitnahmeelement (Nr. 43 in Fig. 1) am Schlitten ist vom inneren Aufbau her identisch zu demjenigen der Stützelemente 40 ausgebildet, wobei die Magnetausnehmungen 57 durch den Hauptkörper des Schlittens überdeckt werden.

Weiter ist in Fig. 2 zur erkennen, dass das Anschlagelement 60 in Form eines Nutensteins ausgebildet ist. Dieser ist in einer hinterschnittenen, insbesondere T-förmigen, Anschlagnut (Nr. 23 in Fig. 3) aufgenommen, wobei er dort jeweils mit einem oder mehreren Gewindestiften 66 festgeklemmt ist.

Weiter sind im Stützkörper 50 mehrere elastische Einsätze 49 eingebaut, mit denen der Anprall der Stützelemente 40 untereinander bzw. am Schlitten gedämpft wird.

Fig. 3 zeigt einen Querschnitt der Linearbewegungsvorrichtung 10 nach Fig. 1 im Bereich eines Stützelements 40. Das Gehäuse 20 hat einen Hauptkörper 21, welcher sich mit einer konstanten, U-förmigen Querschnittsform parallel zur Längsachse 11 erstreckt. Der Hauptkörper 21 besteht vorzugsweise aus Aluminium, wobei er höchst vorzugsweise im Strangpressverfahren hergestellt ist. An der in Fig. 3 oberen Seite des Hauptkörpers 21 ragt der Schlitten aus dem Gehäuse 20 heraus. Der Hauptkörper 21 erstreckt sich im Wesentlichen über die gesamte Länge des Gewindegangs (Nr. 13 in Fig. 1) an der Gewindespindel. An den beiden in Richtung der Längsachse 11 gegenüberliegenden Enden des Hauptkörpers 21 ist jeweils ein gesonderter Endblock befestigt, in welchem jeweils ein Drehlager für die Gewindespindel aufgenommen ist.

In Fig. 3 ist zu erkennen, wie die Reibelemente 44 jeweils an einem zugeordneten U-Schenkel 25 des Hauptkörpers 21 anliegen, so dass dort eine Reibkraft erzeugt wird. Weiter ist zu erkennen, dass der Stützkörper 50 einstückig mit einem Anschlagfortsatz 52 versehen ist, welcher in eine zugeordnete Anschlagnut 23 im Hauptkörper 21 hineinragt. Dort durchsetzt der Schraubbolzen (Nr. 63 in Fig. 2) den Anschlagfortsatz 52, so dass der Gegenanschlagkörper 62 nahezu vollständig innerhalb der Anschlagnut 23 angeordnet ist. Dementsprechend kann er in Berührkontakt mit dem dort ebenfalls angeordneten Anschlagelement (Nr. 60) in Fig. 2 gelangen. Der Anschlagfortsatz 52 ist zwischen der Mittelachse 45 und der Führungsschiene 22 angeordnet.

Die Führungsschiene 22 ist an ihrer Fußseite schwalbenwanzförmig ausgebildet, wobei sie in einer entsprechend angepassten Nut im Hauptkörper 21 fest aufgenommen ist. Die Seitenwände der Nut werden hierfür vorzugsweise durch punktuelle plastische Verformung gegen die Führungsschiene 22 gedrückt. Es ist ebenfalls denkbar, dass die Führungsschiene 22 mit dem Hauptkörper 21 verschraubt ist. Der Stützkörper 50 berührt die Führungsschiene 22 an ihrer ebenen Kopffläche 26. Weiter hat der Stützkörper 50 zwei hackenartige Fortsätze 54, mit welchen er die hinterschnittene Kopfseite der Führungsschiene 22 umgreift. Die hackenartigen Fortsätze 54 sind vorzugsweise so ausgelegt, dass sie die Wälzkörperlaufbahnen 27 an der Führungsschiene 22 nicht berühren, so dass diese nicht beschädigt werden.

Weiter ist in Fig. 3 die Lage der bereits angesprochenen elastischen Einsätze 49 radial außerhalb des Mitnahmeelements 41 zu erkennen.

### Bezugszeichen

- 10: Linearbewegung svorrichtung
- 11: Längsachse
- 12: Gewindespindel
- 13: Gewindegang
- 14: Schlitten
- 16: Lagersitz
- 17: Antriebszapfen

- 20: Gehäuse
- 21: Hauptkörper
- 22: Führungsschiene
- 23: Anschlagnut
- 24: Führungswagen
- 25: U-Schenkel
- 26: Kopffläche der Führungsschiene
- 27: Wälzkörperlaufbahn

- 40: Stützelement
- 41: Mitnahmeelement
- 42: Gegenmitnahmeelement
- 43: Gegenmitnahmeelement
- 44: Reibelement
- 45: Mittelachse
- 46: zweite Feder
- 47: Befestigungsschraube
- 48: dritte Feder
- 49: elastischer Einsatz
- 50: Stützkörper
- 51: Stützdurchbruch
- 52: Anschlagfortsatz
- 53: Gewindebohrung
- 54: hakenartiger Fortsatz
- 55: Führungsausnehmung
- 56: Federausnehmung
- 57: Magnetausnehmungen
- 58: Permanentmagnet
- 59: Reibfläche

- 60: Anschlagelement
- 61: Gegenanschlagelement
- 62: Gegenanschlagkörper
- 63: Schraubbolzen
- 64: Kopf
- 65: erste Feder
- 66: Gewindestift

## Patentansprüche

1. Linearbewegungsvorrichtung (10) mit einem Gehäuse (20), in dem eine Gewindespindel (12) aufgenommen ist, welche wenigstens einen bezüglich einer Längsachse (11) schraubenförmig verlaufenden Gewindegang (13) aufweist, wobei ein Schlitten (14) vorgesehen ist, welcher in Schraubeingriff mit der Gewindespindel (12) steht, wobei wenigstens ein Stützelement (40) vorgesehen ist, welches in Richtung der Längsachse (11) beweglich am Gehäuse (20) gelagert ist, wobei die Gewindespindel (11) an dem wenigstens einen Stützelement (40) quer zur Längsachse (11) abgestützt ist, wobei jedes Stützelement (40) ein Mitnahmeelement (41) aufweist, welches in Richtung der Längsachse (11) in eine lösbare Mitnahmeverbindung mit einem jeweils zugeordneten Gegenmitnahmeelement (42; 43) bringbar ist, wobei das genannte Gegenmitnahmeelement (42; 43) am Schlitten (14) oder an einem benachbarten Stützelement (40) angeordnet ist, wobei jedes Stützelement (40) ein Gegenanschlagelement (61) umfasst, welches derart in Berührkontakt mit einem jeweils zugeordneten Anschlagelement (60) am Gehäuse (20) bringbar ist, dass der Bewegungsweg des genannten Stützelements (40) begrenzt ist,
**dadurch gekennzeichnet, dass** das Gegenanschlagelement (61) in Richtung der Längsachse (11) über eine erste Feder (65) an einem Stützkörper (50) des Stützelements (40) abgestützt ist, so dass es in Richtung der Längsachse (11) federnd beweglich gegenüber dem Stützkörper (50) ist.

2. Linearbewegungsvorrichtung nach Anspruch 1,
wobei das Gegenanschlagelement (61) in Richtung der Längsachse (11) am Stützkörper (50) geführt ist, wobei sein Bewegungsweg durch einen ersten und einen zweiten Endanschlag begrenzt ist, wobei es von der ersten Feder (65) zum ersten Endanschlag hin vorgespannt ist, wobei es durch das zugeordnete Anschlagelement (60) zum zweiten Endschlag hin bewegbar ist.

3. Linearbewegungsvorrichtung nach einem der vorstehenden Ansprüche,
wobei das Gegenanschlagelement (61) einen Gegenanschlagkörper (62) und einem Schraubbolzen (63) mit einem Kopf (64) umfasst, wobei der Schraubbolzen (63) den Stützkörper (50) durchsetzt, wobei er in den Gegenanschlagkörper (62) eingeschraubt ist, wobei die erste Feder (65) zwischen dem Gegenanschlagkörper (62) und dem Stützkörper (50) angeordnet ist.

4. Linearbewegungsvorrichtung nach einem der vorstehenden Ansprüche,
wobei das Gegenanschlagelement (61) in eine lösbare Haftverbindung mit dem Anschlagelement (60) bringbar ist.

5. Linearbewegungsvorrichtung nach einem der vorstehenden Ansprüche,
wobei das Gehäuse (20) wenigstens eine Anschlagnut (23) aufweist, welche sich parallel zur Längsachse (11) erstreckt, wobei der wenigstens eine Stützkörper (50) einen Anschlagfortsatz (51) aufweist, welcher in eine jeweils zugeordnete Anschlagnut (23) hineinragt, wobei das Anschlagelement (60) in der Anschlagnut (23) befestigt ist, wobei das Gegenanschlagelement (61) zumindest abschnittsweise innerhalb der Anschlagnut (23) angeordnet ist, wobei es vom Anschlagfortsatz (52) gehalten wird.

6. Linearbewegungsvorrichtung nach Anspruch 5, rückbezogen auf Anspruch 3,
wobei der Schraubbolzen (63) den Anschlagfortsatz (52) durchsetzt.

7. Linearbewegungsvorrichtung nach einem der vorstehenden Ansprüche,
wobei wenigstens ein Reibelement (44) vorgesehen ist, welches quer zur Längsachse (11) beweglich am Stützkörper (50) gelagert ist, wobei es unter Vorspannung am Gehäuse (20) anliegt.

8. Linearbewegungsvorrichtung nach Anspruch 7,
wobei zwei Reibelemente (44) vorgesehen sind, welche bezüglich einer gemeinsamen Mittelachse (45) fluchtend zueinander angeordnet sind, wobei sie bezüglich der Mittelachse (45) in entgegengesetzter Richtung unter Vorspannung am Gehäuse (20) anliegen.

9. Linearbewegungsvorrichtung nach einem der vorstehenden Ansprüche,
wobei in dem Gehäuse (20) wenigstens eine gesonderte Führungsschiene (22) befestigt ist, an welcher der Schlitten (14) in Richtung der Längsachse (11) beweglich gelagert ist, wobei das wenigstens eine Stützelement (40) an zumindest einer Führungsschiene (22) in Richtung der Längsachse (11) beweglich gelagert ist.

10. Linearbewegungsvorrichtung nach Anspruch 9, rückbezogen auf Anspruch 5,
wobei der Anschlagfortsatz (52) zwischen der wenigstens einen Führungsschiene (22) und der Mittelachse (45) angeordnet ist.

## Claims

1. Linear movement device (10) with a housing (20) which accommodates a threaded spindle (12) which has at least one thread (13) running helically with respect to a longitudinal axis (11), wherein a slide (14) is provided which is in screw engagement with the threaded spindle (12), wherein at least one supporting element (40) is provided which is mounted on the housing (20) so as to be movable in the direction of the longitudinal axis (11), wherein the threaded spindle (12) is supported on the at least one supporting element (40) transversely with respect to the longitudinal axis (11), wherein each supporting element (40) has a carry-along element (41) which can be brought in the direction of the longitudinal axis (11) into a releasable carry-along connection with a respectively assigned counter carry-along element (42; 43), wherein said counter carry-along element (42; 43) is arranged on the slide (14) or on an adjacent supporting element (40), wherein each supporting element (40) comprises a counterstop element (61) which can be brought into touching contact with a respectively assigned stop element (60) on the housing (20) in such a manner that the movement path of said supporting element (40) is limited, **characterized in that** the counterstop element (61) is supported in the direction of the longitudinal axis (11) on a supporting body (50) of the supporting element (40) via a first spring (65) such that said counterstop element is movable resiliently in relation to the supporting body (50) in the direction of the longitudinal axis (11).

2. Linear movement device according to Claim 1, wherein the counterstop element (61) is guided on the supporting body (50) in the direction of the longitudinal axis (11), wherein its movement path is limited by a first and a second end stop, wherein it is pretensioned towards the first end stop by the first spring (65), wherein it is movable towards the second end stop by means of the assigned stop element (60).

3. Linear movement device according to either of the preceding claims, wherein the counterstop element (61) comprises a counterstop body (62) and a screw bolt (63) with a head (64), wherein the screw bolt (63) passes through the supporting body (50), wherein said screw bolt is screwed into the counterstop body (62), wherein the first spring (65) is arranged between the counterstop body (62) and the supporting body (50).

4. Linear movement device according to one of the preceding claims, wherein the counterstop element (61) can be brought into a releasable adhesive connection with the stop element (60).

5. Linear movement device according to one of the preceding claims, wherein the housing (20) has at least one stop groove (23) which extends parallel to the longitudinal axis (11), wherein the at least one supporting body (50) has a stop extension (52) which projects into a respectively assigned stop groove (23), wherein the stop element (60) is fastened in the stop groove (23), wherein the counterstop element (61) is arranged at least in sections within the stop groove (23), wherein said counterstop element is held by the stop extension (52) .

6. Linear movement device according to Claim 5, referring back to Claim 3, wherein the screw bolt (63) passes through the stop extension (52).

7. Linear movement device according to one of the preceding claims, wherein at least one friction element (44) is provided which is mounted on the supporting body (50) so as to be movable transversely with respect to the longitudinal axis (11), wherein it lies on the housing (20) under prestress.

8. Liner movement device according to Claim 7, wherein two friction elements (44) are provided which are arranged aligned with each other with respect to a common centre axis (45), wherein they lie on the housing (20) under prestress in an opposite direction with respect to the centre axis (45).

9. Linear movement device according to one of the preceding claims, wherein at least one separate guide rail (22) on which the slide (14) is mounted movably in the direction of the longitudinal axis (11) is fastened in the housing (20), wherein the at least one supporting element (40) is mounted movably on at least one guide rail (22) in the direction of the longitudinal axis (11).

10. Linear movement device according to Claim 9, referring back to Claim 5, wherein the stop extension (52) is arranged between the at least one guide rail (22) and the centre axis (45).

## Revendications

1. Dispositif de mouvement linéaire (10) comprenant un boîtier (20) dans lequel est reçue une broche filetée (12) qui présente au moins un pas de filetage (13) s'étendant sous forme hélicoïdale par rapport à un axe longitudinal (11), un chariot (14) étant prévu, lequel est en engagement fileté avec la broche filetée (12), au moins un élément de support (40) étant prévu, lequel est supporté dans la direction de l'axe longitudinal (11) de manière déplaçable sur le boîtier (20), la broche filetée (12) étant supportée sur l'au moins un élément de support (40) transversalement à l'axe longitudinal (11), chaque élément de support (40) présentant un élément d'entraînement (41) qui peut être amené en liaison d'entraînement détachable dans la direction de l'axe longitudinal (11) avec un élément d'entraînement conjugué (42 ; 43) respectivement associé, ledit élément d'entraînement conjugué (42 ; 43) étant disposé sur le chariot (14) ou sur un élément de support adjacent (40), chaque élément de support (40) comprenant un élément de contre-butée (61) qui peut être amené en contact avec un élément de butée (60) respectivement associé sur le boîtier (20) de telle sorte que la course de déplacement dudit élément de support (40) soit limitée, **caractérisé en ce que** l'élément de contre-butée (61) est supporté dans la direction de l'axe longitudinal (11) par le biais d'un premier ressort (65) sur un corps de support (50) de l'élément de support (40) de telle sorte qu'il puisse être déplacé élastiquement dans la direction de l'axe longitudinal (11) par rapport au corps de support (50) .

2. Dispositif de mouvement linéaire selon la revendication 1,
dans lequel l'élément de contre-butée (61) est guidé dans la direction de l'axe longitudinal (11) sur le corps de support (50), sa course de déplacement étant limitée par une première et une deuxième butée de fin de course, l'élément de contre butée étant précontraint par le premier ressort (65) vers la première butée de fin de course et pouvant être déplacé par l'élément de butée associé (60) vers la deuxième butée de fin de course.

3. Dispositif de mouvement linéaire selon l'une quelconque des revendications précédentes,
dans lequel l'élément de contre-butée (61) comprend un corps de contre-butée (62) et un boulon fileté (63) avec une tête (64), le boulon fileté (63) traversant le corps de support (50), et étant vissé dans le corps de contre-butée (62), le premier ressort (65) étant disposé entre le corps de contre-butée (62) et le corps de support (50).

4. Dispositif de mouvement linéaire selon l'une quelconque des revendications précédentes, dans lequel l'élément de contre-butée (61) peut être amené en liaison d'adhérence détachable avec l'élément de butée (60).

5. Dispositif de mouvement linéaire selon l'une quelconque des revendications précédentes, dans lequel le boîtier (20) présente au moins une rainure de butée (23) qui s'étend parallèlement à l'axe longitudinal (11), l'au moins un corps de support (50) présentant une saillie de butée (52) qui pénètre dans une rainure de butée respectivement associée (23), l'élément de butée (60) étant fixé dans la rainure de butée (23), l'élément de contre-butée (61) étant disposé au moins en partie à l'intérieur de la rainure de butée (23), et étant retenu par la saillie de butée (52).

6. Dispositif de mouvement linéaire selon la revendication 5, lorsqu'elle se rapporte à la revendication 3, dans lequel le boulon fileté (63) traverse la saillie de butée (52).

7. Dispositif de mouvement linéaire selon l'une quelconque des revendications précédentes,
au moins un élément de friction (44) étant prévu, lequel est supporté de manière déplaçable sur le corps de support (50) transversalement à l'axe longitudinal (11), l'élément de friction s'appliquant avec précontrainte contre le boîtier (20) .

8. Dispositif de mouvement linéaire selon la revendication 7,
deux éléments de friction (44) étant prévus, lesquels sont disposés en affleurement l'un avec l'autre par rapport à un axe médian commun (45), les deux éléments de friction s'appliquant par rapport à l'axe médian (45) dans la direction opposée avec précontrainte contre le boîtier (20).

9. Dispositif de mouvement linéaire selon l'une quelconque des revendications précédentes,
dans lequel au moins un rail de guidage séparé (22) est fixé dans le boîtier (20), sur lequel le chariot (14) est supporté de manière déplaçable dans la direction de l'axe longitudinal (11), l'au moins un élément de support (40) étant supporté de manière déplaçable sur au moins un rail de guidage (22) dans la direction de l'axe longitudinal (11).

10. Dispositif de mouvement linéaire selon la revendication 9 lorsqu'elle se rapporte à la revendication 5, dans lequel la saillie de butée (52) est disposée entre l'au moins un rail de guidage (22) et l'axe médian (45).
